# EUROPEAN PATENT SPECIFICATION

(11) **EP 1 291 260 B1**
(45) Date of publication and mention of the grant of the patent: **25.02.2004**
(21) Application number: 02028207.5
(22) Date of filing: 04.08.1998
(51) Int. Cl.: B62B 7/14, B62B 9/00

(54) **Child transporter**
Kinderwagen
Voiture d'enfant

(30) Priority: 08.08.1997 GB 9716717
(43) Date of publication of application: 12.03.2003
(62) Divisional of application: 98306218.3
(73) Proprietor: BRITAX-TEUTONIA KINDERWAGENFABRIK GmbH, D-32112 Hiddenhausen (DE)
(72) Inventor: Maxisch, Peter, 33106 Paderborn (DE)
(74) Representative: Hollinghurst, Antony

(56) References cited:
- DE-A- 2 613 232
- US-A- 5 601 297

## Description

This invention relates to a child transporter such as a pram or pushchair of the type having a body, a chassis on which the body is supported, and locking means for securing the body on the chassis. A pram of this type is disclosed in DE-A-2613232.

According to the invention, in a child transporter of the type described above, a sensor is adapted to produce an alarm signal if the body is supported on the chassis and the locking means is not engaged.

This attracts the attention of the person placing the body on the chassis in the event that the locking means fails to engage properly.

An embodiment of the invention will now be described, by way of example, with reference to the accompanying drawings, in which:
Figure 1 is a perspective view of a pram in accordance with the invention, with the body secured to the chassis;
Figure 2 is a perspective view, similar to Figure 1, but with the body removed from the chassis;
Figure 3 is an exploded perspective view of the latch mechanism on one of the side rails of the chassis shown in Figures 1 and 2;
Figure 4 is a perspective view from the other side of the mechanism shown in Figure 3 in an intermediate position during engagement;
Figure 5 is a perspective view, similar to Figure 4, showing the latch member fully engaged;
Figure 6 is a cross-sectional view, on a vertical transverse plane, of the latch mechanism in the position shown in Figure 4, fitted with an alarm; and
Figure 7 is a cross-sectional view, similar to Figure 6, but with the mechanism in the position shown in Figure 5.

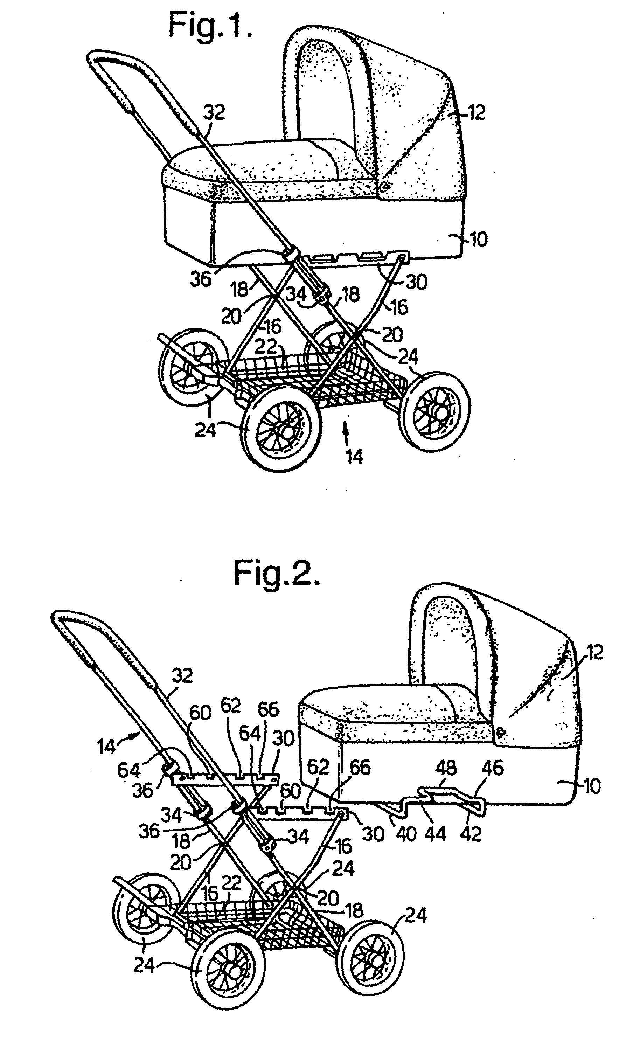

Referring to Figure 1, a pram has a body 10 with a hood 12 supported on a chassis 14. The chassis 14 is of known type, having a pair of side frames, each of which comprises a pair of support members 16 and 18 which are interconnected at their midpoint by a pivot joint 20, and have wheels 24 on their lower ends. The support member 16 which extends upwardly from a rear wheel 24, has its upper end pivotally connected to the front end of a horizontal rail 30, the rear end of which is pivotally connected to a hand 32. The bottom end of the handle 32 is connected by a pivot joint 34 to the side member 18 at an intermediate position between its upper end and the pivot joint 20. A clip 36 secures the handle 32 parallel to the member 18 when the chassis 14 is in its erected position. Release of the catch 18 allows the handle 32 to pivot forwardly, allowing the chassis to be folded. A folding chassis of this type is already known and the folding action will not be described further.

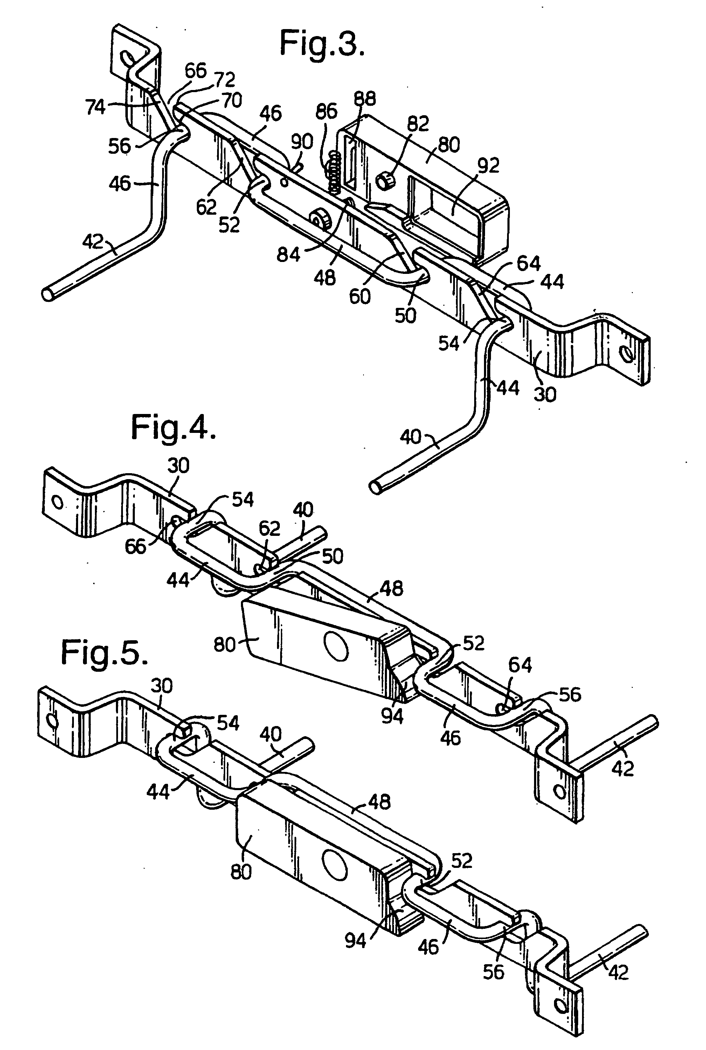

Referring to Figure 2, the body 10 is mounted on a subframe comprising two mutually parallel transverse members 40 and 42 which are interconnected at each end by a side member consisting of outwardly extending end portions 44 and 46 and an inwardly displaced central portion 48. As can be seen from Figure 3, the end portions 44 and 46 are connected to the central portion 48 by respective intermediate transverse links 50 and 52 and to the transverse members 40 and 42 by respective end transverse links 54 and 56. When the body 10 is positioned on the chassis 14, the intermediate transverse links 50 and 52 engage in respective intermediate notches 60 and 62 in the rail 30. The end transverse members 54 and 56 engage in similar end notches 64 and 66.

The notch 66 has a horizontal portion 70 which is connected by a vertical portion 72 to the top edge of the rail 30. The side wall 74 of the vertical portion 72 opposite to the horizontal portion 70 72 is inclined so that the top of the vertical portion 72 is wider than the bottom thereof thereby facilitating alignment of the link 56 as the pram body is lowered on to the chassis 14. The other notches 60, 62 and 64 are of identical shape.

A blocker 80, in the form of a plastics moulding, has a boss 82 by which it is pivotally mounted on a stud 84 secured to the rail 30'. In order to bias the blocker 80 in the counter-clockwise direction (as viewed in Figure 3) a compression spring 86 is received in a pocket 88 in the blocker so as to engage between the bottom of the pocket 88 and a stop 90 which is secured to the rail 30. When the blocker 80 is horizontal, the stop 90 abuts against the top of the pocket 88. The blocker 80 also has a second pocket 92 for accommodating an alarm (not shown in Figure 3) as will be described hereinafter.

The mechanism on the rail 30 on the opposite side of the chassis is substantially the same.

Referring to Figure 4, when it is desired to secure the pram body 10 to the chassis 14, the transverse links 50, 52, 54 and 56 are positioned in the tops of their respective notches and the chassis pressed downwards. The transverse link 50 presses on the top of the blocker 80, pivoting it to the position shown in Figure 4 when the transverse links 50, 52, 54 and 56 have reached the bottoms of the vertical portions 72 of their respective slots 60, 62, 64 and 66. Further angular movement of the blocker 80 in the counter-clockwise (as viewed in Figure 4) is prevented by abutment with a curved projection 94 thereon with the transverse link 52.

The pram body 10 can then be slid on the rail 30 to bring the transverse links 50, 52, 54 and 56 to the closed ends of the horizontal portions 70 of their respective notches. The blocker 80 is then displaced back to its horizontal position, both by the compression spring 86 and by the curved projection 94 so as to prevent disengagement of the links from their respective notches as illustrated in Figure 5.

When it is desired to remove the body 10 from the chassis 14, the left-hand end (as viewed in Figure 5) of the blockers 80 on both sides of the chassis are manually pressed downwards simultaneously so as to displace them to the position shown in Figure 4, in which the links 52 are pushed along the horizontal portions 70 of the notches 60, 62, 64 and 66 by the curved projections 94 until each blocker 80 is held down by its link 50, thus allowing to be lifted off the chassis 14.

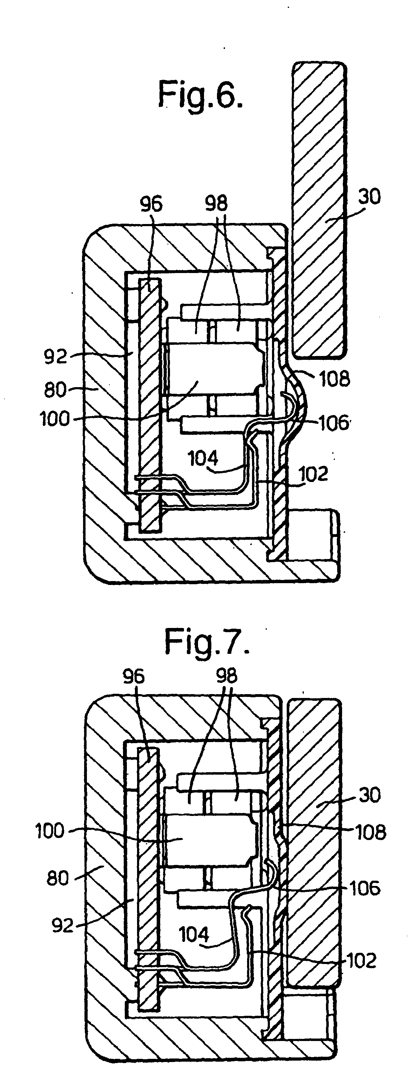

Referring to Figure 6, a printed circuit board 96 is mounted in the pocket 92. The circuit board 96 carries batteries 98, which are retained by a clip 100, a fixed contact 102 and a resilient moving contact 104. The moving contact has an end portion which abuts against the inside of a flexible water-proof membrane 108 which covers the pocket 92. When the blocker 80 is displaced to the position shown in Figures 4 and 6 against the action of the spring 86 (Figure 2), the contacts 102 and 104 are closed. When the blocker 80 is in the position shown in Figures 5 and 7, the contacts 102 and 104 are open.

The circuit board 96 may have either of two electronic circuits. The simpler circuit sounds an audible alarm as soon as the contacts 102 and 104 close e.g. when the body 10 is placed on the chassis 14. The alarm is silenced either when the contacts 102 and 104 reopen, indicating that the body 10 is securely fastened to the chassis 14, or after a predetermined time (e.g. 2 minutes) to prevent undue battery drain if the blocker becomes wedged in the position shown in Figures 4 and 6 during storage.

The more complex circuit has an additional timing function which inhibits the alarm for a short time (e.g. 30 seconds) from when the contacts 102 and 104 close. With this circuit, instead of the alarm sounding every time the body 10 is fastened onto the chassis 14 or removed therefrom, the alarm sounds only if there is any delay in returning the blocker 80 to its normal position during such operations, thereby further reducing unnecessary battery drain.

This application has been divided from Application No. 98306218.3 (published as EP-A-0895922).

## Claims

1. A child transporter having a body (10), a chassis (14) on which the body is supported, and locking means for securing the body (10) on the chassis (14), **characterised by** a sensor (96) adapted to produce an alarm signal if the body is supported on the chassis and the locking means (80) is not engaged.

2. A child transporter according to claim 1, wherein the alarm signal is a sound signal.

3. A child transporter according to claim 1 or 2, wherein the sensor (96) includes a delay device arranged to inhibit production of the alarm signal for a predetermined time after the body (10) is placed on the chassis (14).

4. A child transporter according to claim 1, 2 or 3, wherein the body has detent formations (50, 52, 54, 56) adapted to engage with complementary formations (60, 62, 64, 66) on the chassis (14) and the locking means comprises a blocking member (80) movable between a blocking position obstructing engagement and disengagement of said detent and complementary formations (50-66) and a release position allowing such engagement and disengagement, and the sensor (96) is arranged to produce said alarm signal when said blocking member (80) is in its release position.

5. A child transporter according to claim 4, wherein the blocking member (80) is resiliently biased into its blocking position by a compression spring (86) mounted in a pocket (88) in the blocking member (80).

## Patentansprüche

1. Kinderwagen, die einen Aufbau (10), ein Fahrgestell (14), auf dem der Aufbau getragen ist, und eine Verriegelungseinrichtung zum Befestigen des Aufbaus (10) an dem Fahrgestell (14) aufweist, **gekennzeichnet durch** einen Sensor (96), der ein Alarmsignal erzeugt, wenn der Aufbau auf dem Fahrgestell getragen ist und die Verriegelungseinrichtung (80) nicht in Eingriff ist.

2. Kinderwagen nach Anspruch 1, bei der das Alarmsignal ein akustisches Signal ist.

3. Kinderwagen nach Anspruch 1 oder 2, bei der der Sensor (96) eine Verzögerungseinrichtung umfasst, die dafür vorgesehen ist, das Erzeugen des Alarmsignals für eine vorher bestimmte Zeit, nachdem der Aufbau (10) auf das Fahrgestell (14) gesetzt wurde, zu unterdrücken.

4. Kinderwagen nach Anspruch 1, 2 oder 3, bei der der Aufbau Verzahnungseinrichtungen (50, 52, 54, 56) aufweist, die für ein Eingreifen mit komplementären Einrichtungen (60, 62, 64, 66) an dem Fahrgestell (14) vorgesehen sind, und bei der die Verriegelungseinrichtung ein Blockierelement (80) aufweist, das zwischen einer Blockierstellung, die einen Eingriff und ein Lösen des Eingriffs der Verzahnungseinrichtungen und der komplementären Einrichtungen (50-66) verhindert, und einer Lösestellung, die einen solchen Eingriff und ein Lösen des Eingriffs ermöglicht, bewegbar ist, und bei der der Sensor (96) dafür vorgesehen ist, das Alarmsignal zu erzeugen, wenn das Blockierelement (80) in seiner Lösestellung ist.

5. Kinderwagen nach Anspruch 4, bei der das Blockierelement (80) durch eine Druckfeder (86), die in einer Vertiefung (88) in dem Blockierelement (80) angebracht ist, elastisch in seine Blockierstellung vorgespannt ist.

## Revendications

1. Voiture d'enfant comportant un corps (10), un châssis (14) qui porte le corps, et des moyens de verrouillage pour fixer le corps (10) au châssis (14), **caractérisé par** un capteur (96) adapté pour produire une alarme si le corps est supporté par le châssis et que les moyens de verrouillage ne sont pas engagés.

2. Voiture d'enfant selon la revendication 1, dans laquelle le signal d'alarme est un signal acoustique.

3. Voiture d'enfant selon les revendications 1 et 2, dans laquelle le capteur (96) inclut un dispositif de retardement agencé de manière à empêcher la production du signal d'alarme pendant une durée prédéterminée après que le corps (10) a été placé sur le châssis (14).

4. Voiture d'enfant selon la revendication 1, 2 ou 3, dans laquelle le corps comporte des structures d'arrêt (50, 52, 54, 56), aptes à engrener avec des structures complémentaires (60, 62, 64, 66) présentes sur le châssis (14), et les moyens de verrouillage comprennent un élément de blocage (80) déplaçable entre une position de blocage empêchant l'engagement et le dégagement réciproque desdites structures d'arrêt et desdites structures complémentaires (50, 60), et une position de libération permettant un tel engagement et un tel dégagement, et le capteur (96) est agencé de manière à produire ledit signal d'alarme lorsque ledit élément de blocage (80) est dans sa position de libération.

5. Voiture pour enfant selon la revendication 4, dans laquelle l'élément de blocage (80) est sollicité élastiquement dans sa position de blocage par un ressort de compression (86) monté dans une poche (88) présente dans l'élément de blocage (80).
